(19)

Europäisches
Patentamt
European
Patent Office
Office européen
des brevets

(11) **EP 2 463 681 A2**

(12) **EUROPEAN PATENT APPLICATION**

(43) Date of publication:
**13.06.2012 Bulletin 2012/24**

(51) Int Cl.:
***G01S 5/02*** (2010.01)

(21) Application number: **11460023.2**

(22) Date of filing: **06.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.12.2010 PL 39318110**

(71) Applicant: **Politechnika Gdanska
80-233 Gdansk (PL)**

(72) Inventors:
• **Katulski, Ryszard
80-391 Gdansk (PL)**

• **Stefanski, Jacek
80-180 Gdansk (PL)**
• **Siwicki, Wojciech
80-464 Gdansk (PL)**
• **Sadowski, Jaroslaw
80-464 Gdansk (PL)**
• **Ambroziak, Slawomir
80-341 Gdansk (PL)**

(74) Representative: **Poplawski, Czeslaw
Politechnika Gdanska
Ul. Gabriela Narutowicza 11/12
80-233 Gdansk (PL)**

(54) **Asynchronous system and method for estimating position of persons and/or objects**

(57) Asynchronous system for estimating position of persons and/or objects, which relies on reception of radio signals from at least three ground stations, characterized in that each ground station (S1, S2, S3) features a circuit for transmitting radio signals conveying i.a. its geographic coordinates, and each of these ground stations (S1, S2, S3) features a circuit for receiving signals from at least two stations within radio range and a circuit for measuring and distributing propagation time between these ground stations (S1,S2,S3). A person and/or object (M) is equipped with a circuit for receiving signals conveying geographical coordinates of ground stations (S1,S2,S3) which interacts with a circuit for measuring propagation time between ground stations (S1,S2,S3) and this person and/or object (M).

Fig.1

EP 2 463 681 A2

**Description**

The objective of invention is an asynchronous system for estimating position of persons an/or objects that relies on measurements of radio signals from at least three radio stations, applicable in particular for the tasks of intelligence services.

Satellite systems are the most recent means of estimating one's geographical position. Their principle of operation is based on measurement of time it takes the radio signals to propagate between satellites and the receiver. Best known satellite systems are American GPS, Russian GLONASS, Chinese COMPASS and two systems currently being built: European GALILEO and Indian IRNSS, of which GPS and GLONASS actually have worldwide coverage.

Hyperbolic systems for estimating one's geographical position have commonly been based on measurement of time relationships between signals emitted in synchronicity. Their principle of operation is derived from the fact that the sets of points with a constant difference of distances to two radio beacons take the shape of hyperbolas. The object calculates one hyperbola on which it lies by receiving signals from two radio beacons. The next position hyperbola is calculated after signals from another pair of radio beacons have been received. The intersection point of both hyperbolas is the exact location.

LORAN-C is an established hyperbolic system. It features one master station, designated M and a number of secondaries, identified by W,X,Y. Its transmitters can vary their output power from 200 kW to 2 MW and perform dual function - a single station can be a master station of one chain and a secondary station of another chain, simultaneously.

Asynchronous system for estimating position of persons and/or objects, which relies on reception of radio signals from at least three ground stations, the invention characterized in that each ground station features a circuit for transmitting radio signals conveying i.a. its geographic coordinates, and each of these ground stations features a circuit for receiving signals from at least two stations within radio range and a circuit for measuring and distributing propagation time between these ground stations, and a person and/or object is equipped with a circuit for receiving signals conveying geographical coordinates of ground stations which interacts with a circuit for measuring propagation time between ground stations and this person and/or object.

Asynchronous method of estimating position of persons and/or objects, which relies on reception of radio signals from at least three ground stations conveying geographic positions of these ground stations, the invention characterized in that measurements are made of propagation time between ground stations, and measurements are made of propagation time between ground stations and this person and/or object, and the signal is derived from measurement of propagation time between ground stations, and the relationship:

$$z_a \approx \left(G_a^T Q^{-1} G_a\right)^{-1} G_a^T Q^{-1} h$$

where

$$z_a = \left[z_p^T, r_1\right]^T$$

$$z_p = \left[x_M, y_M\right]^T$$

$$h = \frac{1}{2} \begin{bmatrix} (T_{21} \cdot c)^2 - (x_{S2}^2 + y_{S2}^2) + (x_{S1}^2 + y_{S1}^2) \\ (T_{31} \cdot c)^2 - (x_{S3}^2 + y_{S3}^2) + (x_{S1}^2 + y_{S1}^2) \\ ... \\ (T_{N1} \cdot c)^2 - (x_{SN}^2 + y_{SN}^2) + (x_{S1}^2 + y_{S1}^2) \end{bmatrix}$$

$$G_a = - \begin{bmatrix} x_{S2} - x_{S1} & y_{S2} - y_{S1} & T_{21} \cdot c \\ x_{S3} - x_{S1} & y_{S3} - y_{S1} & T_{31} \cdot c \\ . & . & . \\ x_{SN} - x_{S1} & y_{SN} - y_{S1} & T_{N1} \cdot c \end{bmatrix},$$

$Q$ — covariance matrix of matrix d = $[d_{21}\ d_{31}\ ...\ d_{N1}]^T$

$$d_{21} = T_{21} \cdot c = d_2 - d_1$$

$$d_{31} = T_{31} \cdot c = d_3 - d_1$$

$$d_{N1} = T_{N1} \cdot c = d_N - d_1$$

$T_{21}$ — signal propagation time difference between second and first station,
$T_{31}$ — signal propagation time difference between third and first station,
$T_{N1}$ — signal propagation time difference between N-th and first station,
$d_1$ — distance between first station and the searched location M,
$d_2$ - distance between second station and the searched location M,
$d_N$ — distance between N-th station and the searched location M,
$d_{21}$ — distance difference between second and first station,
$d_{31}$ — distance difference between third and first station,
$d_{N1}$ — distance difference between N-th and first station,
$x_{S1}$, $y_{S1}$ — first station coordinates,
$x_{S2}$, $y_{S2}$ — second station coordinates,
$x_{S3}$, $y_{S3}$ — third station coordinates ,
$x_{SN}$, $y_{SN}$ — N-th station coordinates ,
$x_M$, $y_M$ — person and/or object coordinates,
is used to determine geographic position of the person and/or object.

The method, by means of invention, does not feature chain organization of reference stations, and it is characterized by the lack of clearly assigned control centres, master/reference stations and secondary stations. The system, by means of invention, is an asynchronous system, therefore each station may be switched on and off at any time as long as data from at least three ground stations are available, and each station uses a local generator for transmission, and each station may monitor traffic from neighbouring stations (within radio range) and determine time differences (updated as they occur) between each other.

By means of invention, the method constitutes a capability of particular importance to intelligence services, because of its independency from any other available location systems. In case more than three ground stations are used in the system, much more accurate location of a person and/or object can be obtained.

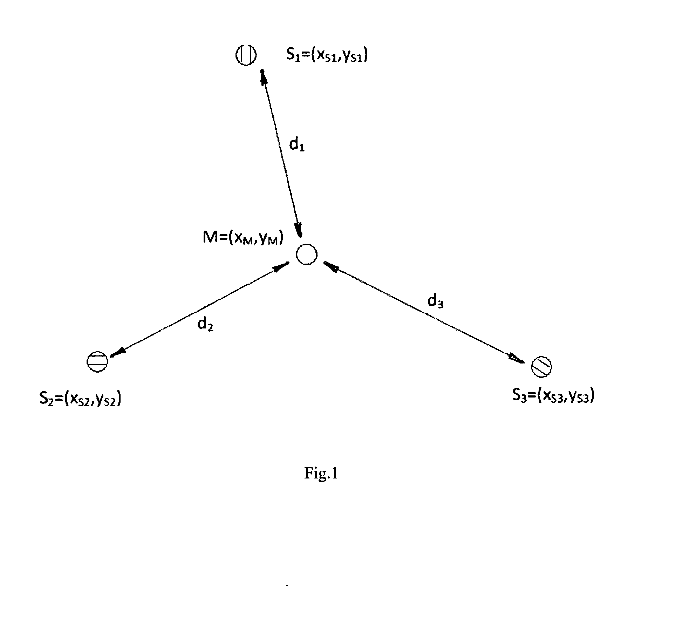

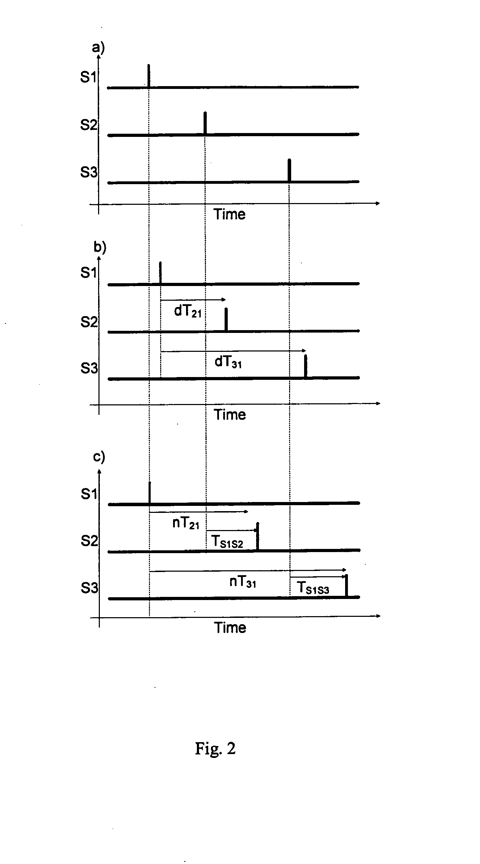

The invention is explained clearly in the example below and in the pictures, where fig.1 depicts a schematics of the ground-based location system comprising three ground stations and a person and/or object whose location is to be found. Fig. 2a. presents sample time relationships of signals emitted by ground stations, fig 2b. shows time relationships at the target location, and fig 2c. displays time relationships at one of ground stations between this and other ground stations.

Example

Method of locating an object in the ground-based location system comprising three ground radio stations
In the area where object M is located, three stations S1, S2, S3 are switched on at coordinates:

$$S1 = (x_{S1}, y_{S1}),$$

$$S2 = (x_{S2}, y_{S2}),$$

$$S3 = (x_{S3}, y_{S3}),$$

Each of stations S1, S2, S3 features a circuit for receiving signals from at least two stations within radio range and a circuit for measuring and distributing propagation time between these stations. Person and/or object M is equipped with a circuit for receiving signals that convey geographic coordinates of ground stations S1, S2, S3, which interacts with a circuit for measuring propagation time between ground stations S1, S2, S3 and that person and/or object M.

Each ground station S1, S2, S3 emits a signal that conveys its geographic coordinates $x_{S1}$, $y_{S1}$, $x_{S2}$, $y_{S2}$, $x_{S3}$, $y_{S3}$. Those signals are received at each of ground stations and propagation times $nT_{21}$, $nT_{31}$ between the ground stations S1, S2, S3 are measured.

Subsequently, the received data $x_{S1}$, $y_{S1}$, $x_{S2}$, $y_{S2}$, $x_{S3}$, $y_{S3}$ (geographic coordinates) and measured data $nT_{21}$, $nT_{31}$ (propagation times) are transmitted from ground stations S1, S2, S3 to object M at its location. Then the propagation time difference $dT_{21}$ between first station S1 and second station S2 is measured, as well as propagation time difference $dT_{31}$ between first station S1 and third station S3, in order to determine the location of object M with respect to S1, S2, S3. The circuit which can be found at person's and/or object's location M is used to calculate the propagation times of signals between ground stations $T_{S1S2}$, $T_{S1S3}$, based on coordinate data $x_{S1}$, $y_{S1}$, $x_{S2}$, $y_{S2}$, $x_{S3}$, $y_{S3}$ received from these stations. The real propagation time difference is determined by:

$$T_{21} = nT_{21} - dT_{21} - T_{S1S2}$$

$$T_{31} = nT_{31} - dT_{31} - T_{S1S3}$$

The next step is to calculate distance differences between the object at location M and ground stations, following the formula:

$$d_{21} = \sqrt{(x_{S2} - x_M)^2 + (y_{S2} - y_M)^2} - \sqrt{(x_{S1} - x_M)^2 + (y_{S1} - y_M)^2},$$

$$d_{31} = \sqrt{(x_{S3} - x_M)^2 + (y_{S3} - y_M)^2} - \sqrt{(x_{S1} - x_M)^2 + (y_{S1} - y_M)^2}.$$

where:

$$d_{21} = T_{21} \cdot c = d_2 - d_1,$$

$$d_{31} = T_{31} \cdot c = d_3 - d_1.$$

$$d_1 = T_1 \cdot c = \sqrt{(x_{S1} - x_M)^2 + (y_{S1} - y_M)^2},$$

$$d_2 = T_2 \cdot c = \sqrt{(x_{S2} - x_M)^2 + (y_{S2} - y_M)^2},$$

$$d_3 = T_3 \cdot c = \sqrt{(x_{S3} - x_M)^2 + (y_{S3} - y_M)^2},$$

$d_1$ — distance between object M and station S 1
$d_2$ — distance between object M and station S2
$d_3$ — distance between object M and station S3
$T_1$ — propagation time between station S1 and object M
$T_2$ — propagation time between station S2 and object M
$T_3$ — propagation time between station S3 and object M
c - electromagnetic wave propagation velocity ($3*10^8$m/s).

Solving the equation below for $d_1$:

$$\begin{bmatrix} x_M \\ y_M \end{bmatrix} = -\begin{bmatrix} x_{S2} - x_{S1} & y_{S2} - y_{S1} \\ x_{S3} - x_{S1} & y_{S3} - y_{S1} \end{bmatrix}^{-1} \times \left\{ \begin{bmatrix} T_{21} \cdot c \\ T_{31} \cdot c \end{bmatrix} d_1 + \frac{1}{2} \begin{bmatrix} (T_{21} \cdot c)^2 - (x_{S2}^2 + y_{S2}^2) + (x_{S1}^2 + y_{S1}^2) \\ (T_{31} \cdot c)^2 - (x_{S3}^2 + y_{S3}^2) + (x_{S1}^2 + y_{S1}^2) \end{bmatrix} \right\}$$

Once the relationship above is substituted in expression

$$d_1 = T_1 \cdot c = \sqrt{(x_{S1} - x_M)^2 + (y_{S1} - y_M)^2},$$

the quadratic equation of variable $d_1$ is obtained:

$$ad_1^2 + bd_1 + c = 0$$

The equation above has two roots, the correct solution being:

$$d_1 = \frac{-b - \sqrt{b^2 - 4ac}}{2a}$$

The derived value of $d_1$ is input into expression:

$$\begin{bmatrix} x_M \\ y_M \end{bmatrix} = -\begin{bmatrix} x_{S2} - x_{S1} & y_{S2} - y_{S1} \\ x_{S3} - x_{S1} & y_{S3} - y_{S1} \end{bmatrix}^{-1} \times \left\{ \begin{bmatrix} T_{21} \cdot c \\ T_{31} \cdot c \end{bmatrix} d_1 + \frac{1}{2} \begin{bmatrix} (T_{21} \cdot c)^2 - (x_{S2}^2 + y_{S2}^2) + (x_{S1}^2 + y_{S1}^2) \\ (T_{31} \cdot c)^2 - (x_{S3}^2 + y_{S3}^2) + (x_{S1}^2 + y_{S1}^2) \end{bmatrix} \right\}$$

which determines the values of geographic coordinates $x_M$, $y_M$ of object M at the location to be found.

**Claims**

1.  Asynchronous system for estimating position of persons and/or objects, which relies on reception of radio signals from at least three ground stations, **characterized in that** each ground station (S1, S2, S3) features a circuit for transmitting radio signals conveying i.a. its geographic coordinates, and each of these ground stations (S1, S2, S3) features a circuit for receiving signals from at least two stations within radio range and a circuit for measuring and distributing propagation time between these ground stations (S1, S2, S3), and a person and/or object (M) is equipped with a circuit for receiving signals conveying geographical coordinates of ground stations (S1, S2, S3) which interacts with a circuit for measuring propagation time between ground stations (S1,S2, S3) and this person and/or object (M).

2.  The method of estimating position of persons and/or objects, which relies on reception of radio signals from at least three ground stations conveying geographic positions of these ground stations, **characterized in that** measurements are made of the propagation times ($T_{S1S2}$, $T_{S1S3}$) between ground stations (S1,S2, S3),and measurements are made of propagation time differences ($dT_{21}$,$dT_{31}$)between ground stations and this person and/or object, and the signal is derived from measurement of propagation time differences ($nT_{21}$,$nT_{31}$)between ground stations, and the relationship:

$$z_a \approx \left(G_a^T Q^{-1} G_a\right)^{-1} G_a^T Q^{-1} h$$

where

$$z_a = \left[z_p^T, r_1\right]^T$$

$$z_p = \left[x_M, y_M\right]^T$$

$$h = \frac{1}{2}\begin{bmatrix} (T_{21} \cdot c)^2 - \left(x_{S2}^2 + y_{S2}^2\right) + \left(x_{S1}^2 + y_{S1}^2\right) \\ (T_{31} \cdot c)^2 - \left(x_{S3}^2 + y_{S3}^2\right) + \left(x_{S1}^2 + y_{S1}^2\right) \\ \dots \\ (T_{N1} \cdot c)^2 - \left(x_{SN}^2 + y_{SN}^2\right) + \left(x_{S1}^2 + y_{S1}^2\right) \end{bmatrix}$$

$$G_a = -\begin{bmatrix} x_{S2} - x_{S1} & y_{S2} - y_{S1} & T_{21} \cdot c \\ x_{S3} - x_{S1} & y_{S3} - y_{S1} & T_{31} \cdot c \\ \cdot & \cdot & \cdot \\ x_{SN} - x_{S1} & y_{SN} - y_{S1} & T_{N1} \cdot c \end{bmatrix},$$

$Q$—covariance matrix of matrix $d=[d_{21}\ d_{31}\ \dots\ d_{N1}]^T$

$$d_{21} = T_{21} \cdot c = d_2 - d_1$$

$$d_{31} = T_{31} \cdot c = d_3 - d_1$$

$$d_{N1} = T_{N1} \cdot c = d_N - d_1$$

$T_{21}$—signal propagation time difference between second and first station,
$T_{31}$—signal propagation time difference between third and first station,
$T_{N1}$—signal propagation time difference between N-th and first station,
$d_1$—distance between first station and the searched location M,
$d_2$—distance between second station and the searched location M,
$d_N$—distance between N-th station and the searched location M,
$d_{21}$—distance difference between second and first station,
$d_{31}$—distance difference between third and first station,
$d_{N1}$—distance difference between N-th and first station,
$x_{S1}$, $y_{S1}$— first station coordinates,
$x_{S2}$, $y_{S2}$— second station coordinates,
$x_{S3}$, $y_{S3}$—third station coordinates ,
$x_{SN}$, $y_{SN}$—N-th station coordinates ,
$x_M$, $y_M$ — person and/or object coordinates,
is used to determine geographic position of the person and/or object.

$S_1=(x_{S1},y_{S1})$

$d_1$

$M=(x_M,y_M)$

$d_2$

$d_3$

$S_2=(x_{S2},y_{S2})$

$S_3=(x_{S3},y_{S3})$

Fig.1

Fig. 2